# EUROPÄISCHE PATENTSCHRIFT

(11) **EP 1 845 288 B1**
(45) Veröffentlichungstag und Bekanntmachung des Hinweises auf die Patenterteilung: **16.02.2011**
(21) Anmeldenummer: 07104089.3
(22) Anmeldetag: 14.03.2007
(51) Int. Cl.: F16H 59/10

(54) **Verfahren und Vorrichtung zur Auswahl von Fahrprogrammen bei Automatikgetrieben**
Method and device for selecting driving programs in automatic transmissions
Procédé et dispositif de sélection de programmes de conduite pour transmission automatique

(30) Priorität: 10.04.2006 DE 102006016780
(43) Veröffentlichungstag der Anmeldung: 17.10.2007
(73) Patentinhaber: Ford Global Technologies, LLC, Dearborn, MI 48126 (US)
(72) Erfinder: Knabe, Ingolf, 50769 Köln (DE)
(74) Vertreter: Dörfler, Thomas

(56) Entgegenhaltungen:
- EP-A1- 0 780 600
- EP-A2- 0 685 664
- DE-A1- 4 233 938
- DE-A1- 4 305 903
- DE-A1- 10 105 491
- JP-A- 2002 276 780
- US-A- 5 527 234
- US-A1- 2001 045 138

## Beschreibung

Die Erfindung betrifft gemäß dem Oberbegriff des Patentanspruchs 1 ein Verfahren zur Fahrprogrammauswahl bei Kraftfahrzeugen mit einem Automatikgetriebe, wobei mindestens zwei unterschiedliche Fahrprogramme, insbesondere ein Economy- und ein Sportprogramm vom Fahrer ausgewählt werden kann. Die Erfindung betrifft ferner gemäß dem Oberbegriff des Patentanspruchs 8 eine Vorrichtung zur Durchführung des Verfahrens.

Die Bedienung von Automatikgetrieben erfolgt oft mittels eines Wählhebels in der Mittelkonsole, der in einer Schaltkulisse geführt wird und die Auswahl der Betriebszustände wie Parksperre, Leerlauf, Rückwärtsfahrt, normaler Fahrbetrieb und Begrenzung des höchsten Gangs beispielsweise für Bergabfahrten ermöglicht. In zunehmenden Maße wird bei Automatikgetrieben dem Fahrer auch die Möglichkeit eines quasimanuellen Gangwechsels ermöglicht. Die Bedienung dazu erfolgt beispielsweise durch einen Wipptaster am Lenkrad oder einer zweiten Schaltkulissengasse des Wählhebels.

Die Auswahl von Fahrprogrammen bei Kraftfahrzeugen mit Automatikgetriebe im Automatikmodus erfolgt meist mittels eines Wippschalters beispielsweise an der Mittelkonsole bzw. am Lenkrad oder durch Taster am Wahlhebel bzw. dem Wahlhebel selbst und bewirkt unter anderem durch Beeinflussung des Getriebebedienfeldes Gangschaltvorgänge bei unterschiedlichen Drehzahlen, so dass beispielsweise im Economy-Programm zur Erzielung niedrigerer Motordrehzahlen und damit eines niedrigeren Kraftstoffverbrauchs das Hochschalten in einen höheren Gang schon früher und analog dazu das Herunterschalten in einen niedrigeren Gang erst später erfolgt, während im Sport-Programm für ein besseres Beschleunigungsverhalten des Kraftfahrzeugs unter Akzeptanz eines höheren Kraftstoffverbrauchs das Hochschalten in einen höheren Gang erst später erfolgt. Bekannt ist auch, dass durch die jeweilige Fahrprogrammauswahl das Motormanagement beispielsweise durch Veränderung des Einspritzpumpen- Kennfelds beeinflusst werden kann.

Die unterschiedlichen Fahrprogramme sind hierzu meist in einer elektronischen Steuereinheit des Automatikgetriebes bzw. der Steuerelektronik des Kraftfahrzeugs abgespeichert, wobei auch adaptive Lösungen bekannt sind, bei denen die Programmabläufe der unterschiedlichen Fahrprogramme automatisch durch Analyse des Fahrverhaltens bzw. durch Fahrercodeeingabe an den jeweiligen Fahrer angepasst werden können. Bekannt sind auch Systeme mit mehr als zwei Fahrprogrammen, zum Beispiel für eine feiner abgestufte Anpassung der Fahrdynamik, aber auch zur Realisierung von Sondermodi wie einer Wintereinstellung zur möglichst drehmomentarmen Kraftübertragung auf die Straße.

So ist aus der DE 37 17 675 eine entsprechende Vorrichtung zur Fahrprogrammauswahl bei Kraftfahrzeugen mit einem Automatikgetriebe bekannt, bei der am Wählhebel ein Tastschalter angeordnet ist, mit dem im Automatikprogrammbetrieb zwischen einem Economy- und einem Sportprogramm gewählt werden kann. Die Nachteile dieser Lösung sind, dass hier eine zusätzliche und Kosten erzeugende Schaltvorrichtung notwendig und durch die Bedienung verschiedener Bedienelemente der Fahrer vom Verkehrsgeschehen abgelenkt wird.

Aus der EP 685 664 ist eine Schaltvorrichtung bekannt, bei der die Auswahl der Fahrprogramme durch die Stellung des Wählhebels innerhalb einer H- förmigen Schaltkulisse erfolgt (verbrauchsorientiertes Fahrprogramm im Bereich der Automatikschaltgasse, sportliches Fahrprogramm im Bereich der manuellen Schaltgasse), wobei die Aktivierung des jeweiligen Fahrprogramms nach Erreichen eines definierten Zeitintervalls erfolgt. Die Umschaltung auf ein anderes Fahrprogramm ist hier daher nachteilhaft zeitverzögert. Ein weiterer Nachteil ist, dass auch hier der Fahrer vom Verkehrsgeschehen abgelenkt wird, da er sich bei der Fahrprogrammauswahl auf die genaue Position des Wählhebels konzentrieren muss.

Dieses Problem tritt auch bei der in der erfindungsgemäßen EP 0780 600 vorgestellten Lösung auf. Hier erfolgt die Umschaltung auf das Sportprogramm durch Verschwenken des Wählhebels in der Quergasse zur Schaltkulissengasse für den manuellen Schaltbetrieb, so dass der Fahrer auch hier durch Konzentration auf eine definierte Wählhebelposition vom Verkehrsgeschehen abgelenkt wird. Außerdem kann es hier leicht geschehen, dass beim Versuch, auf das Sportprogramm zu schalten, beim Verschwenken des Wählhebels durch eine zusätzliche Wählhebelbewegung versehentlich der Automatikmodus ganz verlassen wird. Weiterhin ist nachteilhaft, daß der Fahrer zwar den Wählhebel in die manuelle Schaltgasse verschwenkt, aber immer noch ein Automatikmodus aktiviert ist und der Fahrer erst durch eine zusätzliche Wählhebelbewegung in den manuellen Modus gelangt. Dabei kann ein anderer Gang geschaltet werden, was aber vom Fahrer eigentlich gar nicht beabsichtigt war.

In der DE 199 41 013 wird zum Fahrprogrammwechsel im Automatikmodus der Gangwechseltaster am Lenkrad verwendet und somit eine Ablenkung des Fahrers vom Verkehrsgeschehen vermieden, der Nachteil dieser Lösung ist hier die Notwendigkeit einer zusätzlichen und Kosten erzeugenden Schaltvorrichtung, der Gangwechseltaster am Lenkrad.

Aufgabe der Erfindung ist daher, ein Verfahren sowie eine Vorrichtung zu dessen Durchführung bereitzustellen, die es ermöglichen, dass unter Vermeidung der beim Stand der Technik auftretenden Nachteile ein Wechsel des Fahrprogramms beispielsweise bei Überholvorgängen schnell und sicher erfolgen kann, wobei insbesondere der Fahrer beim Fahrprogrammwechsel nicht von der Fahrzeugführung bzw. der Verkehrsbeobachtung abgelenkt wird. Aufgabe der Erfindung ist weiterhin, die Vorrichtung konstruktiv möglichst einfach und damit Kosten sparend auszuführen, insbesondere unter Vermeidung weiterer Bedienungselemente als dem Wählhebel. Weiterhin soll eine Verwechslung zwischen Automatikmodus und manuellem Modus bei Wählvorrichtungen, die diese beiden Modi aufweisen vermieden werden, indem der Wählhebel im Automatikmodus immer in der Automatikgasse und im manuellen Modus immer in der manuellen Gasse ist.

Erfindungsgemäß wird diese Aufgabe durch das Verfahren gemäß der kennzeichnenden Merkmale des Patentanspruchs 1 sowie durch die Vorrichtung gemäß der kennzeichnenden Merkmale des Patentanspruchs 8 gelöst. Vorteilhafte Ausführungen der Erfindung sind in den kennzeichnenden Merkmalen der Unteransprüche beschrieben.

Die erfindungsgemäße Fahrprogrammauswahl bei Kraftfahrzeugen mit einem Automatikgetriebe erfolgt durch kurzes seitliches Hin- und Herbewegen des Wählhebels, wobei durch geeignete Mittel jeweils entsprechende Signale für die Hin- und Herbewegung erzeugt werden und bei Unterschreitung und/oder Überschreitung definierter Zeitintervalle der beiden Signale der Fahrprogrammwechsel ausgelöst wird. Die seitliche Bewegung quer zur Hauptbetätigungsrichtung des Wählhebels ist dabei nicht allein als rechtwinklige Bewegung zur Schaltkulissengasse zu verstehen, sondern diese Querbewegung kann auch unter einem bestimmten Winkel zur Schaltkulissengasse erfolgen, muß also nicht ganz rechtwinklig zur Schaltkulissengasse sein. Dies ist auch der Fall, wenn die Schaltkulissengasse nicht gerade ist, sondern ein Labyrinth bildet. Der Fahrer muß lediglich durch eine gezielte und beabsichtigte Querbewegung des Wählhebels das Fahrprogramm wechseln können.

Ausgelöst wird ein Fahrprogrammwechsel nur, wenn die Hin- und Herbewegung des Wählhebels innerhalb eines definierten Zeitintervalls der beiden Signale erfolgt. In einer Ausführung der Erfindung sollte das Zeitintervall eine bestimmte Zeit nicht überschreiten. Vorteilhaft ist das Zeitintervall kleiner 2 Sekunden und besonders vorteilhaft kleiner 1 Sekunde. Dies bedeutet, die Hin- und Herbewegung darf nicht länger dauern als 2 Sekunden bzw. 1 Sekunde. Dauert sie länger, erfolgt kein Fahrprogrammwechsel. Das Zeitintervall kann aber auch größer als eine bestimmte Zeitspanne sein, hier 0,1 Sekunden und vorteilhaft größer als 0,5 Sekunden. Dann muß die Hin- und Herbewegung mindestens 0,1 Sekunden bzw. 0,5 Sekunden dauern, ansonsten wird kein Fahrprogrammwechsel durchgeführt.

Schließlich ist noch eine Mischung aus beiden Kriterien möglich. Dann muß das Zeitintervall eine Mindestzeitspanne aufweisen, darf aber eine Höchstzeitspanne nicht überschreiten. Dies heißt z. B., die Hin- und Herbewegung muß mindestens 0,2 Sekunden und darf höchstens 1,5 Sekunden dauern, damit der Fahrprogrammwechsel ausgeführt wird. Mit diesem Verfahren wird sichergestellt, daß ein Fahrerwunsch zum Fahrprogrammwechsel als solcher erkannt wird und der Fahrer bewußt die Hin- und Herbewegung des Wählhebels ausführt. Zufällige Hin- und Herbewegungen des Wählhebels, weil z. B. Fahrer oder Mitfahrer aus Versehen den Wählhebel bewegen, führen dann nicht zu einem Fahrprogrammwechsel.

Bei dem Verfahren können auch zwei Fahrprogramme dadurch ausgewählt werden, indem eine Hin- und Herbewegung des Wählhebels auf eine Seite ein erstes Fahrprogramm und eine Hin- und Herbewegung des Wählhebels auf die andere Seite ein zweites Fahrprogramm auslöst. Darunter ist zu verstehen, daß zur Schaltung des ersten Fahrprogramms die Hinbewegung in eine Richtung quer zur Schaltkulissengasse erfolgt, und zur Schaltung des zweiten Fahrprogramms die Hinbewegung in die entgegengesetzte Richtung quer zur Schaltkulissengasse erfolgt. Damit kann der Fahrer eindeutig ein Fahrprogramm aktivieren, ohne das er Kenntnis vom aktuellen Fahrprogramm hat.

Das Verfahren kann auch so ausgeführt werden, dass mindestens zwei Fahrprogramme dadurch auswählbar sind, indem der Wählhebel mehrmals hintereinander hin- und herbewegt wird und die Anzahl der Hin- und Herbewegungen das auszuwählende Fahrprogramm bestimmt. Damit kann eine bestimmte Anzahl von Fahrprogrammen durchgeschaltet werden bis wieder das ursprüngliche Fahrprogramm geschaltet ist.

Vorteilhaft erfolgt die seitliche Hin- und Herbewegung durch eine Antippen des Wählhebels gegen eine Federkraft und wieder Loslassen. Hierzu wird der Wählhebel kurz gegen eine Federkraft zur Seite gedrückt, d.h. quer zur Bewegungsrichtung innerhalb der Schaltkulissengasse, wobei durch geeignete Mittel wie Positionssensoren sowohl beim Verlassen als auch Wiederherstellen der Wählhebel-Ruheposition (Wählhebelstellung "D" im Automatikmodus) jeweils entsprechende Signale erzeugt werden, die in einer Steuereinheit wie der Getriebesteuerung oder einer zentralen Fahrzeugelektronik hinsichtlich ihres zeitlichen Abstandes analysiert werden und in der Folge mittels der Steuereinheit einen Fahrprogrammwechsel auslösen.

Ein weitere Ausgestaltung des Verfahrens sieht vor, daß der Wählhebel zwischen der Hinbewegung und der Herbewegung in eine Raststellung bewegt wird. Diese Raststellung kann im Bewegungsweg des Wählhebels vorgesehen sein. Die Raststellung kann aber auch eine andere Schaltposition des Wählhebels sein, z. B. die Schaltpositionen für der manuellen Modus bei einer Schaltvorrichtung, die eine entsprechende Schaltgasse zwischen Automatikmodus und manuellem Modus aufweist.

Vorteilhaft können die Verfahren mit Federbelastung und Rastposition kombiniert werden, indem durch Antippen des Wählhebels gegen eine Federbelastung ein erstes Fahrprogramm ausgelöst wird und durch Hin- und Herbewegung des Wählhebels in eine Raststellung ein zweites Fahrprogramm ausgelöst wird.

Die erfinderische Vorrichtung zur Auswahl mindestens zweier unterschiedlicher Fahrprogramme bei Kraftfahrzeugen mit einem Automatikgetriebe umfaßt einen Automatikgetriebe-Wählhebel, der in einer Schaltkulissengasse geführt wird, Mittel zur Erzeugung von elektrischen Signalen jeweils beim seitlichen Hin- und Herbewegen des Wählhebels und eine Steuervorrichtung, die bei Unterschreitung eines definierten Zeitintervalls der bei der Hin- und Herbewegung erzeugten Signale einen Fahrprogrammwechsel auslöst. Mit dieser Vorrichtung läßt sich vorteilhaft eines der vorher beschriebenen Verfahren durchführen.

In einer Ausführung der Vorrichtung wird das elektrische Signal zum Fahrprogrammwechsel durch seitliches d.h. zur Bewegungsrichtung innerhalb der Schaltkulissengasse Antippen in Querrichtung und wieder Loslassen des Wählhebels gegen eine Federkraft erzeugt, wobei die Steuereinheit erst dann einen Fahrprogrammwechsel auslöst, wenn die Federkraft einen definierten Wert überschreitet, die beiden Signale beim Antippen und wieder Loslassen des Wählhebels in einem definierten Zeitintervall erfolgen und der Wählhebel sich im Automatikmodus, insbesondere in der Stellung D, befindet. Die Federkraft gibt dem Fahrer eine Rückmeldung, daß der Wählhebel korrekt betätigt wurde. Statt der definierten Federkraft kann auch ein bestimmter Verschwenkweg des Wählhebels als Kriterium zugrundegelegt werden. Dann weiß der Fahrer, daß bei einem bestimmten Weg des Wählhebels, den dieser bei der Hinbewegung zurücklegt, der Wählhebel korrekt betätigt wurde.

Eine weitere Ausführung der Vorrichtung sieht vor, dass das elektrische Signal zum Fahrprogrammwechsel durch eine seitliche Hinbewegung in eine Rastposition und eine anschließende Herbewegung des Wählhebels erzeugt wird, wobei die Steuereinheit erst dann einen Fahrprogrammwechsel auslöst, wenn das Erreichen der Rastposition durch geeignete Mittel detektiert worden ist, die Hin- und Herbewegung des Wählhebels in einem definierten Zeitintervall erfolgt und der Wählhebel sich im Automatikmodus, insbesondere in der Stellung D, befindet. Bei dieser Ausführung kann eine ohnehin am der Vorrichtung vorhandene Rastposition einer weiteren Schaltposition benutzt werden, um die Signale zu erzeugen, z. B. die Schaltpositionen für der manuellen Modus bei einer Schaltvorrichtung, die eine entsprechende Schaltgasse zwischen Automatikmodus und manuellem Modus aufweist.

Vorteilhaft verfügt die Schaltkulisse der Automatikgetriebe-Schaltvorrichtung über eine Schaltkulissengasse, in der der Wählhebel mindestens die Schaltstellungen P, R, N und D einnehmen kann. Weiterhin ist vorteilhaft, wenn die Schaltkulisse zusätzlich über eine Schaltkulissengasse für den manuellen Gangwechselmodus verfügt, in der der Wählhebel die Schaltstellungen zum manuellen Gangwechselmodus, zum Hochschalten und zum Herunterschalten einnehmen kann. Die Schaltkulisse kann zusätzlich über eine Schaltkulissen-Quergasse zum Wechseln zwischen den Schaltkulissengassen von Automatikmodus und manuellen Gangwechselmodus verfügen.

In einer weiteren Ausführung sind mehr als zwei Fahrprogramme dadurch auswählbar, dass der Wählhebel entweder nach links und/oder nach rechts hin- und herbewegt wird. Dann muß der Wählhebel lediglich entsprechende Freiheitsgrade in beide seitlichen Bewegungsrichtungen aufweisen.

Eine Anzeige des jeweils aktiven Fahrprogramms kann dabei beispielsweise durch ein Display im Armaturenbrett erfolgen. Da der Fahrprogrammwechsel nur durch seitliches Antippen des Wählhebels erfolgt, muss der Fahrer dabei nicht auf irgendein Bedienelement oder eine Bedienelement- Position sehen und ist somit in keiner Weise vom Fahren und der Beobachtung der Verkehrssituation abgelenkt. Die vorliegende Erfindung ist bei Automatikgetriebe- Schaltungen sowohl mit einer als auch mit mehreren Schaltkulissengassen einsetzbar, also auch bei Wählhebeln beispielsweise mit einer Automatik- und einer manuellen Kulissengasse.

Diese im Sinne der Erfindung sehr vorteilhaften Eigenschaften führen dazu, dass im Gegensatz zum bisherigen Stand der Technik mit dem bereitgestellten Verfahren und der bereitgestellten Vorrichtung in kostengünstigerer und konstruktiv einfacherer Weise bei Kraftfahrzeugen mit einem Automatikgetriebe eine Fahrprogrammauswahl beispielsweise bei Überholvorgängen ermöglicht wird, ohne die Aufmerksamkeit des Fahrers vom Verkehrsgeschehen abzulenken. Somit werden die der Erfindung zugrunde liegenden Aufgaben durch das bereitgestellte Verfahren sowie durch die bereitgestellte Vorrichtung zur Durchführung des Verfahrens vollkommen gelöst.

Nachfolgend werden zwei bevorzugte Ausführungsbeispiele der erfindungsgemäßen Vorrichtung weiter unter Bezugnahme auf die beigefügten Zeichnungen erläutert. Es zeigen:
- Fig. 1: eine schematische Darstellung einer erfindungsgemäßen Schaltvorrichtung mit nur einer Schaltkulissengasse und
- Fig. 2: eine schematische Darstellung einer erfindungsgemäßen Schaltvorrichtung mit zwei Schaltkulissengassen zur Bedienung eines Kraftfahrzeug- Automatikgetriebes sowohl im Automatikmodus als auch im Modus zum manuellen Gangwechsel.

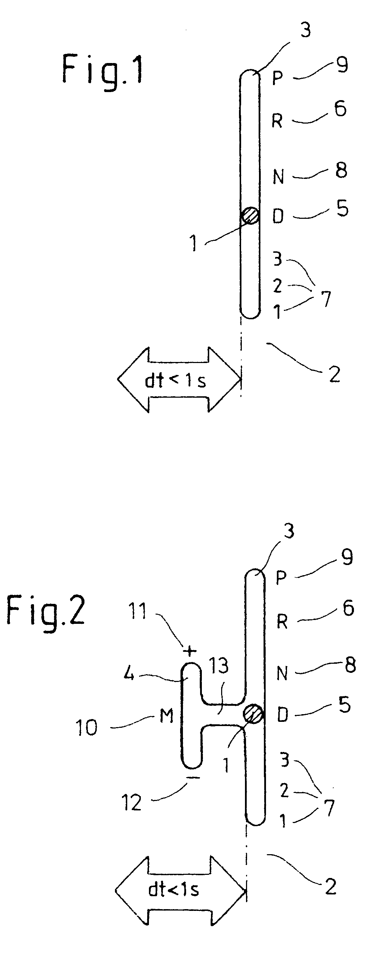

Die Fig. 1 zeigt eine Schaltkulisse 3 nur für den Automatikmodus mit geschnittenem Wählhebel 1 im Innenraum eines Kraftfahrzeugs, insbesondere auf der Mittelkonsole. Der Wählhebel 1 ist um seinen Drehpunkt schwenkbar gelagert. In der Schaltkulisse ist die übliche Anordnung der einzelnen Wählhebel-Schaltpositionen für die zugeordneten Automatikgetriebeprogramme "P" 9, "R" 6, "N" 8, "D" 5, die Programme zur Begrenzung des höchsten Gangs 7 beispielsweise für Bergabfahrten "3", "2", "1" zu erkennen. Von der Wählhebel-Schaltposition "D" 5 aus ist durch Antippen des Wählhebels 1 nach links und wieder Loslassen ein Umschalten des Fahrprogramms beispielsweise vom Economy- Programm in das Sportprogramm bei einem Überholvorgang möglich. Ein Sensor erfasst dabei das Antippen und wieder Loslassen des Wählhebels 1, die dabei generierten Steuersignale werden an ein das automatische Getriebe steuerndes elektronisches Steuergerät weitergegeben. Die Steuereinheit löst erst dann einen Fahrprogrammwechsel aus, wenn die Federkraft bei einem Kraftsensor bzw. der Verschwenkweg des Wählhebels 1 bei einem Positionssensor einen definierten Wert überschreitet, die beiden Signale beim Antippen und wieder Loslassen des Wählhebels innerhalb einer Sekunde erfolgen und der Wählhebel sich in der Stellung "D" 5 im Automatikmodus befindet.

Will der Fahrer zu einem späteren Zeitpunkt wieder zum ursprünglichen, beispielsweise dem Economy- Programm zurückkehren, so muss er lediglich den Wählhebel 1 erneut nach links antippen und wieder loslassen. Durch die vom Sensor ausgesendeten Signale wird die Umschaltung in das ursprüngliche Automatik-Programm ausgelöst.

Die Fig. 2 zeigt als weitere Ausführungsform eine Schaltkulisse 4 sowohl für den Automatikmodus als auch für den manuellen Gangwechsel- Modus mit geschnittenem Wählhebel 1. Sie umfasst zwei Schaltgassen 3 und 4. In der ersten Schaltgasse 3, der Automatik-Schaltgasse, ist die übliche Anordnung der einzelnen Wählhebel-Schaltpositionen für die zugeordneten Automatikgetriebeprogramme "P" 9, "R" 6, "N" 8, "D" 5 und die Programme zur Begrenzung des höchsten Gangs 7 beispielsweise für Bergabfahrten "3", "2", "1" zu erkennen.

Von der Wählhebel-Schaltposition "D" 5 ist der Wählhebel 1 über eine Quergasse 13 in die zweite Schaltgasse 4 umschwenkbar, so daß sich der Wählhebel in der Position 10 für den manueller Gangwechsel befindet. Jetzt können vom Fahrer manuelle Gangwechsel durchgeführt werden, und zwar durch nach Vorne Schieben des Wählhebels 1 in die Position "+" 11 ein Hochschalten und durch Zurückziehen des Wählhebels 1 in die Position "-" 12 ein Herunterschalten. Auch hier ist von der Wählhebel-Schaltposition "D" 5 aus durch Antippen des Wählhebels 1 nach links und wieder Loslassen ein Umschalten des Fahrprogramms beispielsweise vom Economy-Programm in das Sportprogramm bei einem Überholvorgang möglich.

Dabei kann die Umschaltung je nach Ausführung dadurch erfolgen, daß der Wählhebel 1 gegen eine Federkraft vom Fahrer angetippt wird und der Wählhebel 1 dann von selbst wieder in die Wählhebel-Schaltposition "D" 5 zurückfedert. Oder der Wählhebel 1 wird bewußt vom Fahrer kurz in die Position 10 für den manueller Gangwechsel gebracht. Die Position ist eine Raststellung insofern, als daß der Wählhebel 1 in dieser Position 10 einrasten würde. Für die Durchführung des Verfahrens muß der Wählhebel 1 aber innerhalb des Zeitintervalls vom Fahrer wieder zurück in die Stellung "D" 5 gebracht werden.

Beim Umschwenken des Wählhebels 1 in die Schaltgasse 4 kann kein versehentliches Umschalten in ein anderes Fahrprogramm erfolgen, da die Steuereinheit erst dann einen Fahrprogrammwechsel auslöst, wenn die beiden Signale beim Antippen und wieder Loslassen des Wählhebels 1 innerhalb eines Zeitintervalls erfolgen und der Wählhebel sich in der Stellung "D" 5 im Automatikmodus befindet.

### Bezugszeichenliste

- 1: Wählhebel
- 2: Mittelkonsole
- 3: Schalt- Kulissengasse 1 für den Automatikmodus
- 4: Schalt- Kulissengasse 2 für den manuellen Gangwechsel
- 5: Wählhebelstellung Automatik- Fahrbetrieb vorwärts
- 6: Wählhebelstellung Automatik- Fahrbetrieb rückwärts
- 7: Wählhebelstellungen Automatik- Fahrbetrieb mit Begrenzung des höchsten Gangs
- 8: Wählhebelstellung Leerlauf
- 9: Wählhebelstellung Parksperre
- 10: Wählhebelstellung Fahrbetrieb manueller Gangwechsel
- 11: Wählhebelstellung Fahrbetrieb manueller Gangwechsel - Hochschalten
- 12: Wählhebelstellung Fahrbetrieb manueller Gangwechsel - Herunterschalten
- 13: Schaltkulissen- Quergasse

## Patentansprüche

1. Verfahren zur Auswahl mindestens zweier unterschiedlicher Fahrprogramme bei Kraftfahrzeugen mit einem Automatikgetriebe, insbesondere eines Economy- und eines Sportprogramms, und insbesondere unter Vermeidung weiterer Bedienungselemente als dem Automatikgetriebe-Wählhebel, **dadurch gekennzeichnet, dass** der Wechsel des Fahrprogramms durch kurzes seitliches Hin- und Herbewegen des Wählhebels (1) erfolgt, wobei durch geeignete Mittel jeweils entsprechende Signale für die Hin- und Herbewegung erzeugt werden und bei Unterschreitung und/oder Überschreitung definierter Zeitintervalle der beiden Signale der Fahrprogrammwechsel ausgelöst wird.

2. Verfahren nach Anspruch 1, **dadurch gekennzeichnet, daß** ein Zeitintervall bei Unterschreitung kleiner 2 Sekunden ist, insbesondere kleiner 1 Sekunde, und bei Überschreitung größer als 0,1 Sekunden, insbesondere 0,5 Sekunden.

3. Verfahren nach Anspruch 1 oder 2, **dadurch gekennzeichnet, dass** zumindest zwei Fahrprogramme **dadurch** auswählbar sind, indem eine Hin- und Herbewegung des Wählhebels (1) auf eine Seite ein erstes Fahrprogramm und eine Hin- und Herbewegung des Wählhebels (1) auf die andere Seite ein zweites Fahrprogramm auslöst.

4. Verfahren nach Anspruch 1, 2 oder 3, **dadurch gekennzeichnet, dass** mindestens zwei Fahrprogramme **dadurch** auswählbar sind, dass der Wählhebel (1) mehrmals hintereinander hin- und herbewegt wird und die Anzahl der Hin- und Herbewegungen das auszuwählende Fahrprogramm bestimmt.

5. Verfahren nach einem der vorherigen Ansprüche, **dadurch gekennzeichnet, daß** die seitliche Hin- und Herbewegung durch eine Antippen des Wählhebels (1) gegen eine Federkraft und wieder Loslassen erfolgt.

6. Verfahren nach einem der vorherigen Ansprüche, **dadurch gekennzeichnet, daß** der Wählhebel (1) zwischen der Hinbewegung und der Herbewegung in eine Raststellung bewegt wird.

7. Verfahren nach Anspruch 5 und 6, **dadurch gekennzeichnet, daß** durch Antippen des Wählhebels nach Anspruch 5 ein erstes Fahrprogramm ausgelöst wird und durch Hin- und Herbewegung des Wählhebels in eine Raststellung nach Anspruch 6 ein zweites Fahrprogramm ausgelöst wird.

8. Vorrichtung zur Auswahl mindestens zweier unterschiedlicher Fahrprogramme bei Kraftfahrzeugen mit einem Automatikgetriebe, insbesondere eines Economy- und eines Sportprogramms, und insbesondere unter Vermeidung weiterer Bedienungselemente als dem Automatikgetriebe-Wählhebel, umfassend einen Automatikgetriebe-Wählhebel (1), der in einer Schaltkulissengasse (3) geführt wird, gekennzeichet durch
Mittel zur Erzeugung von elektrischen Signalen jeweils beim seitlichen Hin- und Herbewegen des Wählhebels (1), und
eine Steuervorrichtung, die bei Unterschreitung eines definierten Zeitintervalls der bei der Hin- und Herbewegung erzeugten Signale einen Fahrprogrammwechsel auslöst.

9. Vorrichtung nach Anspruch 8 zur Durchführung eines Verfahrens nach einem der Ansprüche 1 bis 7.

10. Vorrichtung nach einem der Ansprüche 8 oder 9, **dadurch gekennzeichnet, dass** das elektrische Signal zum Fahrprogrammwechsel durch seitliches d.h. zur Bewegungsrichtung innerhalb der Schaltkulissengasse Antippen in Querrichtung und wieder Loslassen des Wählhebels (1) gegen eine Federkraft erzeugt wird, wobei die Steuereinheit erst dann einen Fahrprogrammwechsel auslöst, wenn die Federkraft einen definierten Wert überschreitet,
die beiden Signale beim Antippen und wieder Loslassen des Wählhebels in einem definierten Zeitintervall erfolgen und
der Wählhebel sich im Automatikmodus (5), insbesondere in der Stellung D, befindet.

11. Vorrichtung nach einem der Ansprüche 8 bis 10, **dadurch gekennzeichnet, dass** das elektrische Signal zum Fahrprogrammwechsel durch seitliches Antippen und wieder Loslassen des Wählhebels (1) gegen eine Federkraft erzeugt wird, wobei die Signale durch Positionssensoren sowohl beim Verlassen als auch Wiederherstellen der Wählhebel- Ruheposition d.h. der Wählhebelstellung D im Automatikmodus (5) erzeugt werden und die Steuereinheit erst dann einen Fahrprogrammwechsel auslöst, wenn
der Verschwenkweg des Wählhebels einen definierten Wert überschreitet,
die beiden Signale beim Antippen und wieder Loslassen des Wählhebels in einem definierten Zeitintervall erfolgen und
der Wählhebel sich im Automatikmodus (5), insbesondere in der Stellung D, befindet.

12. Vorrichtung nach einem der Ansprüche 8 bis 11, **dadurch gekennzeichnet, dass** das elektrische Signal zum Fahrprogrammwechsel durch eine seitliche Hinbewegung in eine Rastposition und eine anschließende Herbewegung des Wählhebels (1) erzeugt wird, wobei die Steuereinheit erst dann einen Fahrprogrammwechsel auslöst, wenn
das Erreichen der Rastposition durch geeignete Mittel detektiert worden ist,
die Hin- und Herbewegung des Wählhebels in einem definierten Zeitintervall erfolgt und
der Wählhebel sich im Automatikmodus (5), insbesondere in der Stellung D, befindet.

13. Vorrichtung nach einem der Ansprüche 8 bis 12, **dadurch gekennzeichnet, dass** die Schaltkulisse der Automatikgetriebe-Schaltvorrichtung über eine Schaltkulissengasse verfügt, in der der Wählhebel (1) mindestens die Schaltstellungen P (9), R (6), N (8) und D (5) einnehmen kann.

14. Vorrichtung nach Anspruch 13, **dadurch gekennzeichnet, dass** die Schaltkulisse zusätzlich über eine Schaltkulissengasse für den manuellen Gangwechselmodus verfügt, in der der Wählhebel (1) die Schaltstellungen zum manuellen Gangwechselmodus (10), zum Hochschalten (11) und zum Herunterschalten (12) einnehmen kann.

15. Vorrichtung nach Anspruch 14, **dadurch gekennzeichnet, daß** die Schaltkulisse zusätzlich eine Schaltkulissen-Quergasse (13) zum Wechseln zwischen den Schaltkulissengassen von Automatikmodus und manuellen Gangwechselmodus verfügt.

16. Vorrichtung nach einem der Ansprüche 8 bis 15, **dadurch gekennzeichnet, dass** mehr als zwei Fahrprogramme **dadurch** auswählbar sind, dass der Wählhebel (1) entweder nach links und/oder nach rechts hin- und herbewegt wird.

17. Vorrichtung nach einem der Ansprüche 8 bis 16, **dadurch gekennzeichnet, dass** die Vorrichtung auch eine Anzeigevorrichtung umfaßt und das jeweils aktive Fahrprogramm in dieser Anzeigevorrichtung angezeigt wird.

18. Vorrichtung nach Anspruch 17, **dadurch gekennzeichnet, dass** die Anzeigevorrichtung in der Instrumententafel eines Kraftfahrzeugs angeordnet ist.

## Claims

1. Method for selecting at least two different driving programs in motor vehicles having an automatic transmission, in particular an economy program and a sport program, and in particular avoiding operator controls other than the automatic transmission selector lever, **characterized in that** the driving program is changed by brief, lateral to and fro movement of the selector lever (1), with suitable means respectively generating corresponding signals for the to and fro movement, and the changeover in the driving program being triggered when time intervals between the two signals drop below and/or exceed defined values.

2. Method according to Claim 1, **characterized in that**, when a time interval drops below the defined value it is less than 2 seconds, in particular less than 1 second, and when it exceeds the defined value it is greater than 0.1 second, in particular 0.5 second.

3. Method according to Claim 1 or 2, **characterized in that** at least two driving programs can be selected by virtue of the fact that a to and fro movement of the selector lever (1) to one side triggers a first driving program, and a to and fro movement of the selector lever (1) to the other side triggers a second driving program.

4. Method according to Claim 1, 2 or 3, **characterized in that** at least two driving programs can be selected by virtue of the fact that the selector lever (1) is moved repeatedly to and fro in succession, and the number of to and fro movements determines the driving program to be selected.

5. Method according to one of the preceding claims, **characterized in that** the lateral to and fro movement is carried out by tipping the selector lever (1) counter to a spring force and releasing it again.

6. Method according to one of the preceding claims, **characterized in that** the selector lever (1) is moved into a latched position between the to movement and the fro movement.

7. Method according to Claims 5 and 6, **characterized in that** by tipping the selector lever according to Claim 5, a first driving program is triggered and a second driving program is triggered by the to and fro movement of the selector lever into a latched position according to claim 6.

8. Device for selecting at least two different driving programs in motor vehicles having an automatic transmission, in particular an economy program and a sport program, and in particular avoiding operator controls other than the automatic transmission selector lever, comprising
an automatic transmission selector lever (1) which is guided in a shifting gate alley (3), **characterized by** means for generating electrical signals during every lateral to and fro movement of the selector lever (1), and
a control device which triggers a driving program changeover when the time interval between the signals generated during the to and fro movement drops below a defined value.

9. Device according to Claim 8 for carrying out a method according to one of Claims 1 to 7.

10. Device according to one of Claims 8 or 9, **characterized in that** the electrical signal for changing over the driving program is generated by tipping in the transverse direction laterally, i.e. with respect to the direction of movement within the shifting gate alley, and releasing the selector lever (1) again counter to a spring force, the control unit not triggering a driving program changeover until the spring force exceeds a defined value,
the two signals occur with a defined time interval when the selector lever is tipped and released again, and the selector lever is in the automatic mode (5), in particular in the position D.

11. Device according to one of Claims 8 to 10, **characterized in that** the electrical signal for changing the driving program is generated by laterally tipping the selector lever (1) counter to a spring force, and releasing it again, with the signals being generated by position sensors both when the selector lever leaves the position of rest and when it returns to it, i.e. the selector lever position D being generated in the automatic mode (5) and the control unit not triggering a changeover of the driving program until
the pivot path of the selector lever exceeds a defined value,
the two signals occur with a defined time interval when the selector lever is tipped and released again, and the selector lever is in the automatic mode (5), in particular in the position D.

12. Device according to one of Claims 8 to 11, **characterized in that** the electrical signal for changing over the driving program is triggered by a lateral to movement to a latching position and a subsequent fro movement of the selector lever (1), the control unit not triggering a driving program changeover until
the reaching of the latched position has been detected by suitable means,
the to and fro movement of the selector lever occurs in a defined time interval, and
the selector lever is in the automatic mode (5), in particular in the position D.

13. Device according to one of Claims 8 to 12, **characterized in that** the shifting gate of the automatic transmission shifting device has a shifting gate alley in which the selector lever (1) can assume at least the shifted positions P (9), R (6), N (8) and D (5).

14. Device according to Claim 13, **characterized in that** the shifting gate additionally has a shifting gate alley for the manual gear change mode, in which alley the selector lever (1) can assume the shifted positions for the manual gear change mode (10), for shifting up (11) and for shifting down (12).

15. Device according to Claim 14, **characterized in that** the shifting gate additionally has a shifting gate transverse alley (13) for changing between the shifting gate alleys for the automatic mode and those for the manual gear change mode.

16. Device according to one of Claims 8 to 15, **characterized in that** more than two driving programs can be selected by virtue of the fact that the selector lever (1) is moved to and fro to the left and/or to the right.

17. Device according to one of Claims 8 to 16, **characterized in that** the device also comprises a display device and the respectively active driving program is displayed in this display device.

18. Device according to Claim 17, **characterized in that** the display device is arranged on the dashboard of a motor vehicle.

## Revendications

1. Procédé pour sélectionner au moins deux programmes de conduite différents dans des véhicules automobiles avec une transmission automatique, notamment un programme de conduite économique et un programme de conduite sportive, et notamment en évitant d'autres éléments de commande en plus du levier de sélection de la transmission automatique, **caractérisé en ce que** le changement du programme de conduite a lieu par un court déplacement latéral de va-et-vient du levier de sélection (1), des signaux correspondants étant à chaque fois produits pour le déplacement de va-et-vient par des moyens appropriés, et en cas de dépassement, par le haut et/ou par le bas d'intervalles de temps définis des deux signaux, un changement de programme de conduite étant déclenché.

2. Procédé selon la revendication 1, **caractérisé en ce qu'**un intervalle de temps, en cas de dépassement par le bas, est inférieur à 2 secondes, notamment est inférieur à 1 seconde, et en cas de dépassement par le haut, est supérieur à 0,1 secondes, en particulier supérieur à 0,5 secondes.

3. Procédé selon la revendication 1 ou 2, **caractérisé en ce qu'**au moins deux programmes de conduite peuvent être sélectionnés **en ce qu'**un déplacement de va-et-vient du levier de sélection (1) d'un côté déclenche un premier programme de conduite et un déplacement de va-et-vient du levier de sélection (1) de l'autre côté déclenche un deuxième programme de conduite.

4. Procédé selon la revendication 1, 2 ou 3, **caractérisé en ce qu'**au moins deux programmes de conduite peuvent être sélectionnés **en ce que** le levier de sélection (1) est déplacé en va-et-vient plusieurs fois successives, et le nombre des déplacements de va-et-vient détermine le programme de conduite à sélectionner.

5. Procédé selon l'une quelconque des revendications précédentes, **caractérisé en ce que** le déplacement de va-et-vient latéral a lieu par un basculement du levier de sélection (1) à l'encontre d'une force de ressort et par son relâchement subséquent.

6. Procédé selon l'une quelconque des revendications précédentes, **caractérisé en ce que** le levier de sélection (1) est déplacé entre le déplacement aller et le déplacement retour dans une position d'encliquetage.

7. Procédé selon les revendications 5 et 6, **caractérisé en ce que** par basculement du levier de sélection selon la revendication 5, un premier programme de conduite est déclenché et par déplacement en va-et-vient du levier de sélection dans une position d'encliquetage selon la revendication 6, un deuxième programme de conduite est déclenché.

8. Dispositif pour sélectionner au moins deux programmes de conduite différents dans des véhicules automobiles comprenant une transmission automatique, notamment un programme de conduite économique et un programme de conduite sportive, et notamment en évitant d'autres éléments de commande en plus du levier de sélection de la transmission automatique, comprenant :
un levier de sélection (1) de la transmission automatique, qui est guidé dans un chemin de coulisse de commutation (3),
**caractérisé par**
des moyens pour produire des signaux électriques à chaque fois dans le cas d'un déplacement de va-et-vient du levier de sélection (1) et
un dispositif de commande qui, en cas de dépassement par le bas d'un intervalle de temps défini des signaux produits lors du déplacement de va-et-vient, déclenche un changement de programme de conduite.

9. Dispositif selon la revendication 8, pour mettre en oeuvre un procédé selon l'une quelconque des revendications 1 à 7.

10. Dispositif selon l'une quelconque des revendications 8 ou 9, **caractérisé en ce que** le signal électrique pour le changement de programme de conduite est produit par un basculement latéral, c'est-à-dire dans la direction de déplacement à l'intérieur du chemin de coulisse de commutation, dans la direction transversale, et par un relâchement subséquent, du levier de sélection (1) à l'encontre d'une force de ressort, l'unité de commande déclenchant seulement un changement de programme de conduite si la force de ressort dépasse une valeur définie,
les deux signaux, lors du basculement et du relâchement subséquent du levier de sélection se produisent dans un intervalle de temps défini et le levier de sélection se trouve en mode automatique (5), notamment dans la position D.

11. Dispositif selon l'une quelconque des revendications 8 à 10, **caractérisé en ce que** le signal électrique pour le changement de programme de conduite est produit par un basculement latéral et un relâchement subséquent du levier de sélection (1) à l'encontre d'une force de ressort, les signaux étant produits par des capteurs de position à la fois lors d'un départ de la position de repos du levier de sélection et lors d'un rétablissement de la position de repos du levier de sélection, c'est-à-dire de la position D du levier de sélection en mode automatique (5), et l'unité de commande déclenchant alors seulement un changement de programme de conduite si la course de pivotement du levier de sélection dépasse une valeur définie,
les deux signaux, lors du basculement et du relâchement subséquent du levier de sélection se produisent dans un intervalle de temps défini et le levier de sélection se trouve en mode automatique (5), notamment dans la position D.

12. Dispositif selon l'une quelconque des revendications 8 à 11, **caractérisé en ce que** le signal électrique pour le changement de programme de conduite est produit par un déplacement latéral aller dans une position d'encliquetage et un déplacement retour subséquent du levier de sélection (1), l'unité de commande déclenchant alors seulement un changement de programme de conduite si
des moyens appropriés détectent l'arrivée dans la position d'encliquetage,
le déplacement de va-et-vient du levier de sélection a lieu dans un intervalle de temps défini et
le levier de sélection se trouve en mode automatique (5), notamment dans la position D.

13. Dispositif selon l'une quelconque des revendications 8 à 12, **caractérisé en ce que** la coulisse de commutation du dispositif de commutation de la transmission automatique dispose d'un chemin de coulisse de commutation, dans lequel le levier de sélection (1) peut adopter au moins les positions de commutation P(9), R(6), N(8) et D(5).

14. Dispositif selon la revendication 13, **caractérisé en ce que** la coulisse de commutation dispose en outre d'un chemin de coulisse de commutation pour le mode de changement de vitesse manuel, dans lequel le levier de sélection (1) peut adopter les positions de commutation pour le mode de changement de vitesse manuel (10), pour le passage à une vitesse supérieure (11) et pour le rétrogradage (12).

15. Dispositif selon la revendication 14, **caractérisé en ce que** la coulisse de commutation dispose en outre d'un chemin transversal de coulisse de commutation (13) pour passer entre les chemins de coulisse de commutation du mode automatique au mode de changement de vitesse manuel.

16. Dispositif selon l'une quelconque des revendications 8 à 15, **caractérisé en ce que** plus de deux programmes de conduite peuvent être choisis en déplaçant suivant un mouvement de va-et-vient le levier de sélection (1) vers la gauche et/ou vers la droite.

17. Dispositif selon l'une quelconque des revendications 8 à 16, **caractérisé en ce que** le dispositif comprend aussi un dispositif d'affichage et le programme de conduite actif respectif est affiché dans ce dispositif d'affichage.

18. Dispositif selon la revendication 17, **caractérisé en ce que** le dispositif d'affichage est disposé dans le tableau de bord d'un véhicule automobile.
